# FASCICULE DE BREVET EUROPEEN

(11) **EP 2 777 134 B1**
(45) Date de publication et mention de la délivrance du brevet: **13.10.2021**
(21) Numéro de dépôt: 12790684.0
(22) Date de dépôt: 07.11.2012
(51) Int. Cl.: H02K 1/16, H02K 19/12, H02K 19/26

(54) **MACHINE A COMMUTATION DE FLUX**
FLUSSSCHALTMASCHINE
FLUX-SWITCHING MACHINE

(30) Priorité: 10.11.2011 FR 1160278
(43) Date de publication de la demande: 17.09.2014
(73) Titulaire: Moteurs Leroy-Somer, 16000 Angoulême (FR)
(72) Inventeur: MANFE, Philippe, F-16730 Linars (FR); GAUSSENS, Benjamin, F-31600 La Masquere (FR)
(74) Mandataire: Nony
(86) Numéro de dépôt international: PCT/IB2012/056235
(87) Numéro de publication internationale: WO 2013/068947

(56) Documents cités:
- EP-A1- 0 872 946
- EP-A1- 0 909 010
- JP-A- 8 009 607
- US-A1- 2011 163 618

## Description

La présente invention concerne les machines à commutation de flux et plus particulièrement mais non exclusivement celles dites à simple excitation.

Une machine à commutation de flux comporte un rotor non bobiné dépourvu d'aimants permanents et un stator comportant des bobinages de phases et des bobinages d'excitation ou des aimants permanents. La tension alternative aux bornes des bobinages de phase est produite par la commutation du flux consécutive à la rotation du rotor.

Dans les machines à simple excitation conventionnelles, le stator est composé d'une succession de dents et d'encoches dans lesquelles sont disposées successivement une bobine d'excitation et une bobine de phase.

Le brevet US 6 242 834 divulgue à la figure 6 un exemple d'une telle machine.

La figure 11 décrit une machine à double excitation, avec des encoches logeant des aimants permanents au stator.

Les publications « Low Cost Flux - Switching Brushless AC Machines » 978-1-4244-8218-4/10©Crown, "A wound-Field Three-Phase Flux Switching Synchronous Motor with All Excitation Sources on the Stator" 978-1-4244-2893-9/09© 2009 IEEE pages 1502 à 1509, "Low Cost, High Power Density, Flux Switching Machines and Drives for Power Tools", 0-7803-7883-0/03© 2003 IEEE, "Flux Switching Motors for Automotive Applications" 07803-7883-0/03© 2003 IEEE, "A new structure of 12 Slot 10 Pole Field Excitation Flux Switching Synchronous machine for Hybrid Electric Vehicules" EPE 2011 Birmingham, ISBN 9789075815153 pages 1 à 10, et "A Novel E-core Flux Switching PM Brushless AC Machine", 978-1-4244-5287-3/10/$26.00© 2010 IEEE pages 3811-3818 décrivent d'autres exemples de machines à commutation de flux.

La publication FR 2 898 439 divulgue une machine à commutation de flux à double excitation. Les encoches du stator présentent des formes inégales pour permettre de loger dans les encoches les plus profondes à la fois des bobinages d'excitation et des bobinages de phase.

EP 0 909 010 divulgue une machine électrique à commutation de flux.

Dans une machine à commutation de flux, chaque encoche recevant des conducteurs d'un bobinage d'excitation et les deux encoches adjacentes recevant des conducteurs de bobinages de phases constituent une cellule élémentaire.

Les bobines d'excitation et les bobines de phases couvrent chacune deux pas dentaires au stator, c'est-à-dire que les encoches qui les reçoivent sont séparées par deux dents.

Ces machines se caractérisent généralement par l'emploi d'une quantité importante de cuivre ou autre matériau conducteur pour réaliser les bobinages d'excitation, afin de limiter les pertes par effet Joule et leurs effets sur le rendement.

Une autre particularité de ces machines est la forme d'onde de la tension qui présente souvent un fort taux d'harmoniques.

La demande de brevet EP 0 872 946 décrit une machine électrique à commutation de flux dont les bobinages d'excitation sont reçus dans une paire d'encoches séparées de deux dents ou s'étendant respectivement sur la face intérieure et la face extérieure de la carcasse en étant alignées radialement.

Le brevet US 3 253 170 divulgue une machine dans laquelle les dents du rotor sont inclinées longitudinalement (tooth skewing) grâce à un décalage progressif des tôles rotoriques.

La publication JP 8 009 607 et la demande de brevet US 2001/0163618 divulguent une machine à reluctance variable, excitée par un bobinage, dans laquelle le flux embrassé par la phase est sujet à des variations relativement faibles car elles résultent uniquement de la variation de réluctance sous le pôle quand le rotor tourne. Le flux qui en résulte est uniquement positif ou unidirectionnel. De plus, chaque bobine de phase entoure une seule dent du stator.

L'invention vise à proposer une nouvelle machine à commutation de flux visant à réduire la quantité de matériau conducteur utilisée et à obtenir une forme d'onde ayant un faible taux d'harmoniques, sans recourir aux techniques traditionnelles d'inclinaison du paquet de tôles stator ou rotor, lesquelles induisent une réduction significative de la puissance spécifique.

L'invention a ainsi pour objet une machine à commutation de flux comportant un stator portant des bobinages de phases et des bobinages d'excitation, machine dans laquelle au moins un bobinage d'excitation est disposé dans une paire d'encoches séparées par au moins trois dents.

Grâce à l'invention, on obtient une machine fonctionnant avec un nombre de bobines d'excitation plus faible que dans le cas d'un pas dentaire de deux, ce qui se traduit par une économie de matériau conducteur.

Une machine selon l'invention est compacte, sans bobinage sur la partie tournante, le contrôle de la tension s'effectuant à partir des bobinages d'excitation disposés au stator.

La présence d'une troisième dent de re-bouclage du flux entre deux cellules élémentaires, permet de générer des variations de flux sinusoïdales présentant un très faible contenu d'harmoniques.

Le flux embrassé par chaque phase est bi directionnel (c'est-à-dire alternatif) et repose sur une modification du trajet du flux dans le stator par la saillance du rotor. Il en résulte une meilleure conversion d'énergie.

Chaque bobine de phase entoure de préférence deux dents statoriques.

Les encoches sont de préférence non vides.

Le nombre de dents au rotor peut être égal à k x 11 ou à k x 13 et le nombre de dents au stator peut être égal à k x 18, avec k entier non nul, par exemple égal à 1, 2 ou 3. Ce nombre de dents produit une tension avec une forme d'onde de bonne qualité.

Une telle forme d'onde peut être obtenue sans recourir aux techniques d'inclinaison du paquet de tôle stator ou rotor, et donc sans réduire la puissance spécifique. Les dents peuvent ainsi être réalisées sans inclinaison longitudinale.

Les bobines d'excitation ou de phases présentent avantageusement des axes orientés radialement.

De préférence, la machine est à simple excitation, et le stator ne comporte pas d'aimants permanents.

Dans un exemple de mise en œuvre de l'invention, le stator comporte un seul type de bobinage de phase par encoche, notamment un seul bobinage de phase par encoche.

Notamment, les encoches où sont présents les bobinages d'excitation ne comportent pas de bobinage de phase.

Les dents peuvent être régulièrement espacées circonférentiellement sur le stator.

Chaque bobinage de phase peut embrasser deux dents consécutives, c'est-à-dire se loger dans des encoches attenantes à ces dents.

La machine peut être un alternateur ou un moteur.

L'invention pourra être mieux comprise à la lecture de la description détaillée qui va suivre, d'exemples non limitatifs de mise en œuvre de celle-ci, et à l'examen du dessin annexé, sur lequel :
- la figure 1 illustre de façon schématique un agencement de bobinage de machine à commutation de flux connue,
- la figure 2 représente un exemple de machine selon l'invention,
- la figure 3 est un résultat de simulation pour une configuration particulière du rotor et du stator, et
- la figure 4 représente la forme d'onde de flux en fonction de la position angulaire pour la configuration illustrée à la figure 3.

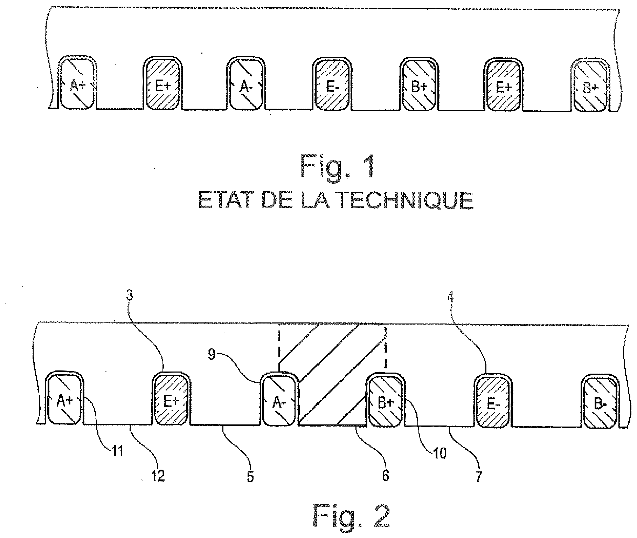

La figure 1 représente une structure de machine à commutation à simple flux, connue. Le stator est représenté de façon linéaire, pour simplifier.

La machine comporte une succession de cellules élémentaires constituées chacune par une encoche contenant les conducteurs E+ ou E- d'un bobinage d'excitation et par deux encoches adjacentes recevant les conducteurs des bobines de phase A+, A-, B+, B-, C+ ou C-, la machine étant polyphasée, notamment triphasée, A, B et C désignant les phases.

Les bobinages d'excitation sont reliés classiquement à une source de courant continu.

Par convention, les signes + et - sont affectés aux conducteurs selon qu'ils vont dans un sens ou dans l'autre au sein de l'encoche. Une même bobine d'excitation comporte ainsi des conducteurs E+ et E-.

L'axe de chaque bobine est orienté radialement.

Le pas dentaire des bobines d'excitation est de deux, les encoches recevant les conducteurs des bobines d'excitation étant séparées par deux dents.

On a représenté à la figure 2 un exemple de machine selon l'invention, dans laquelle deux encoches 3 et 4 recevant les conducteurs + et - d'une même bobine d'excitation E sont séparées par trois dents 5, 6 et 7, et par deux encoches 9 et 10 recevant respectivement les bobinages de deux phases différentes, par exemple A- et B+ comme illustré.

Les encoches recevant les conducteurs + et - d'une même bobine d'une phase sont séparées par deux dents et par une encoche recevant les conducteurs + ou - d'un bobinage d'excitation.

Ainsi, par exemple, comme illustré, les conducteurs A+ et A- de la phase A sont reçus dans des encoches 9 et 11 séparées par les dents 5 et 12 et par l'encoche 3.

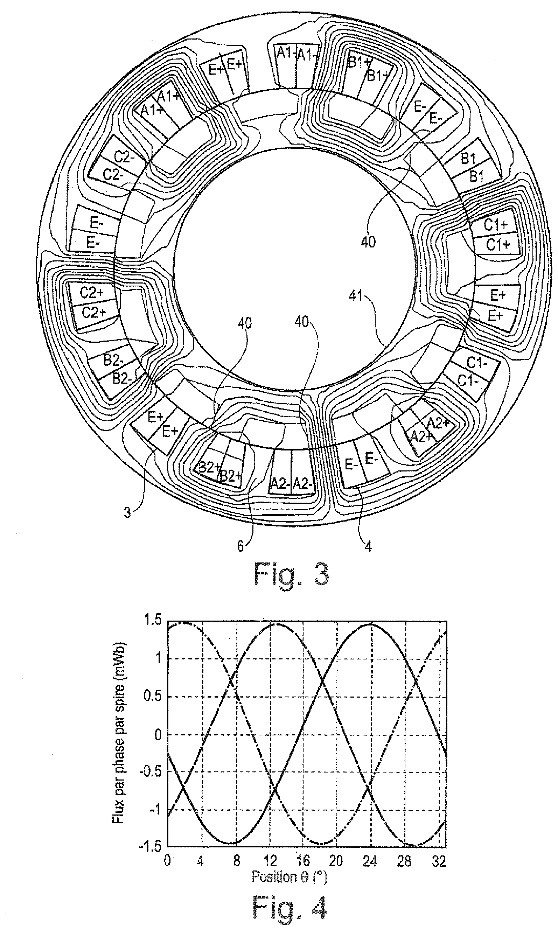

La dent 6 située entre les encoches 9 et 10 participe au re-bouclage du flux, comme on peut le voir à l'examen de la figure 3 qui représente les lignes de flux pour une machine ayant une configuration particulière, à savoir un nombre de dents au stator n_{ds} égal à 18 et un nombre de dents au rotor n_{dr} égal à 11. D'autres configurations sont possibles, notamment avec n_{dr} = k x 11 ou k x 13 et n_{ds} = k x 18.

On voit sur la figure 3 que le rotor peut être réalisé avec des dents 40 saillantes, sans épanouissements polaires, équiréparties angulairement autour de l'axe de rotation. Les dents 40 se raccordent chacune à un corps de forme annulaire 41, lequel est monté sur un arbre non représenté. La largeur d'une dent rotor est de préférence, comme illustré, sensiblement égale à celle d'une dent stator.

Le rotor et le stator sont de préférence réalisés par empilage de tôles magnétiques.

La figure 4 illustre la forme d'onde de flux pour chacune des phases en fonction de la position angulaire du rotor, pour la configuration représentée à la figure 3.

Une machine selon l'invention peut être utilisée dans toute application où la tension peut être contrôlée par action sur le courant d'excitation, telles que des applications à charge et/ou à vitesse variable.

La machine selon l'invention peut fonctionner à tension constante sur une plage de vitesse relativement importante.

L'invention n'est pas limitée à l'exemple illustré.

Par exemple, les encoches recevant les bobinages d'excitation et celles recevant les bobinages de phases peuvent être de formes différentes et être décalées radialement afin de faciliter le montage des bobines et réduire l'encombrement axial de la machine.

Des aimants permanents peuvent être utilisés au stator mais de préférence, la machine est sans excitation à aimants permanents.

## Revendications

1. Machine à commutation de flux, comportant un stator portant des bobinages de phases et des bobinages d'excitation, machine **caractérisée en ce qu'**au moins un bobinage d'excitation (E+, E-) est disposé dans une paire d'encoches (3, 4) séparées par au moins trois dents (5, 6, 7).

2. Machine selon la revendication 1, les encoches de la paire d'encoches (3, 4) étant séparées par trois dents.

3. Machine selon la revendication 1 ou 2, étant à simple excitation.

4. Machine selon l'une quelconque des revendications précédentes, comportant un seul bobinage de phase (A, B, C) par encoche.

5. Machine selon l'une quelconque des revendications précédentes, les dents au rotor et/ou au stator étant non inclinées longitudinalement.

6. Machine selon l'une quelconque des revendications précédentes, le nombre de dents au rotor n_{dr} étant égal à k x 11 ou k x 13 et le nombre de dents au stator n_{ds} étant égal à k x 18, avec k entier non nul.

7. Machine selon la revendication 6, avec k = 1, 2 ou 3.

8. Machine selon l'une quelconque des revendications précédentes, les dents (40) étant régulièrement espacées circonférentiellement au stator.

9. Machine selon l'une quelconque des revendications précédentes, étant triphasée.

10. Machine selon l'une quelconque des revendications précédentes, chaque bobinage de phase (A, B, C) embrassant deux dents consécutives.

11. Machine selon l'une quelconque des revendications précédentes, constituant un alternateur.

## Patentansprüche

1. Flussschaltmaschine, umfassend einen Phasenwicklungen und Erregerwicklungen tragenden Stator, wobei die Maschine **dadurch gekennzeichnet ist, dass** mindestens eine Erregerwicklung (E+, E-) in einem Paar Nuten (3, 4) angeordnet ist, die durch mindestens drei Zähne (5, 6, 7) getrennt sind.

2. Maschine nach Anspruch 1, wobei die Nuten des Paars Nuten (3, 4) durch drei Zähne getrennt sind.

3. Maschine nach Anspruch 1 oder 2, wobei die Maschine eine Maschine mit einfacher Erregung ist.

4. Maschine nach einem der vorhergehenden Ansprüche, umfassend eine einzige Phasenwicklung (A, B, C) pro Nut.

5. Maschine nach einem der vorhergehenden Ansprüche, wobei die Zähne am Rotor und/oder am Stator in Längsrichtung nicht geneigt sind.

6. Maschine nach einem der vorhergehenden Ansprüche, wobei die Anzahl von Zähnen am Rotor n_{dr} gleich k x 11 oder k x 13 ist und die Anzahl von Zähnen am Stator n_{ds} gleich k x 18 ist, wobei k eine ganze Zahl von ungleich null ist.

7. Maschine nach Anspruch 6, wobei k = 1, 2 oder 3 ist.

8. Maschine nach einem der vorhergehenden Ansprüche, wobei die Zähne (40) um den Umfang des Stators gleichmäßig verteilt sind.

9. Maschine nach einem der vorhergehenden Ansprüche, wobei die Maschine eine Drehstrommaschine ist.

10. Maschine nach einem der vorhergehenden Ansprüche, wobei jede Phasenwicklung (A, B, C) zwei aufeinanderfolgende Zähne umgibt.

11. Maschine nach einem der vorhergehenden Ansprüche, die einen Wechselstromgenerator bildet.

## Claims

1. Flux-switching machine comprising a stator bearing phase windings and excitation windings, which machine is **characterized in that** at least one excitation winding (E+, E-) is arranged in a pair of grooves (3, 4) separated by at least three teeth (5, 6, 7) .

2. Machine according to Claim 1, the grooves of the pair of grooves (3, 4) being separated by three teeth.

3. Machine according to Claim 1 or 2, said machine being a single excitation machine.

4. Machine according to any one of the preceding claims, comprising a single phase winding (A, B, C) per groove.

5. Machine according to any one of the preceding claims, the teeth on the rotor and/or on the stator not being skewed longitudinally.

6. Machine according to any one of the preceding claims, the number of teeth on the rotor n_{dr} being equal to k x 11 or k x 13 and the number of teeth on the stator n_{ds} being equal to k x 18, where k is an integer, not equal to zero.

7. Machine according to Claim 6, where k = 1, 2 or 3.

8. Machine according to any one of the preceding claims, the teeth (40) being regularly spaced circumferentially on the stator.

9. Machine according to any one of the preceding claims, said machine being three-phase.

10. Machine according to any one of the preceding claims, each phase winding (A, B, C) encompassing two consecutive teeth.

11. Machine according to any one of the preceding claims, said machine constituting an alternator.
